**Europäisches Patentamt**

**European Patent Office**

**Office européen des brevets**

(19)

(11) Publication number: **0 165 062**

**A2**

(12) # EUROPEAN PATENT APPLICATION

(21) Application number: **85304191.1**

(22) Date of filing: **12.06.85**

(51) Int. Cl.⁴: **B 62 D 55/02**

(30) Priority: **15.06.84 GB 8415277**

(43) Date of publication of application:
**18.12.85 Bulletin 85/51**

(84) Designated Contracting States:
**BE DE FR GB IT NL SE**

(71) Applicant: **Technical Research Products Limited**
**1 Maddox Street**
**London W1R 0LB(GB)**

(72) Inventor: **Thomas, Roger**
**6 Shawford Road West Ewell**
**Epsom Surrey(GB)**

(74) Representative: **Higgins, Michael Roger**
**Marks & Clerk 57/60 Lincoln's Inn Fields**
**London WC2A 3LS(GB)**

(54) **Improvements in or relating to track laying vehicles.**

(57) A tracklaying vehicle (1) has detachable wheels (14, 15, 32) which support the vehicle (1) with its tracks (2, 3) clear of the ground. The wheels (14, 15, 32) may sink into soft ground to allow the tracks (2, 3) to resume drive. Two wheels (14, 15) are mounted at one end of the vehicle coaxially with the track driving wheels (8, 11) so as to be driven. The other end of the vehicle (1) is supported by a castor wheel assembly (28).

FIG.1.

IMPROVEMENTS IN OR RELATED TO TRACK
LAYING VEHICLES

The present invention relates to track laying vehicles.

A significant problem with tracked vehicles is their limited speed and the damage which tracks of a heavy vehicle may cause to road surfaces, for example the damage caused by tanks moving over urban roads.

The present invention provides a track laying vehicle having a plurality of wheels for supporting the vehicle on a surface with its tracks clear of the supporting surface, one or more of the wheels being driven.

The wheels allow for rapid movement of the vehicle. When the vehicle meets soft terrain the wheels may embed themselves in the ground, bringing the tracks into ground contact, which can then be used to continue movement of the vehicle.

Preferably the wheels are readily detachable from the vehicle to allow normal tracked operation.

The wheels may be mounted to be movable to a position out of contact with the supporting surface. In another form the wheels may carry pneumatic tyres or the like which are deflatable to allow the tracks to be used for drive continuously without having to remove the wheels.

Preferably one or more of the wheels are driven by a drive member or members which drives a track. Preferably a pair of driven wheels are provided, one on each of two sides of the vehicle, on the axis of a respective track driving wheel.

To allow steering of the vehicle when supported on the wheels, an additional wheel or wheels may be provided, supported as castor or jockey wheels, steering preferably being obtained by relative rotation of driven wheels, in the same manner as a tracked vehicle is steered. Preferably the castors are mounted in tapered roller bearings.

In a particularly preferred embodiment, a pair of driven wheels are each attached to a drive wheel of a respective track and a castor wheel is positioned to provide three point support of the vehicle. Accordingly the vehicle may be driven and steered using the track drive train, but with the tracks clear of the ground.

Two castor wheels may be used.

Preferably the wheels are deformable or are resiliently mounted so that on meeting a significant obstacle the wheel circumference will deform or retreat to allow a track or tracks to engage the obstacle to provide track laying drive to surmount the obstacle.

Location of the wheels will depend on the way in which drive is supplied to the tracks and whether the vehicle has a front or rear end per se.

Where the track driving wheels are at the front of a vehicle and the wheels are mounted coaxially with the track driving wheels, the driven wheels are preferably deformable so that on meeting an object head on the wheels deform to allow the tracks, which are driven continuously with the wheels, to scale the object. The wheel size and/or location of the track driving wheels may be arranged so that the front runs, or a part thereof, of the tracks are always just forward of the wheels. Similarly the castor wheel or wheels may be arranged so that when at the forward end of the vehicle the tracks may extend ahead of the wheels.

A single castor wheel may be provided inboard of the tracks, supported on the centre line of the vehicle. It being necessary for efficient operation of most tracked vehicles to distribute the weight evenly on either side of the vehicle during movement.

The invention also provides a set of wheels for mounting on a track laying vehicle to raise the tracks clear of the ground.

The invention will be further described by way of example with reference to the accompanying drawings, in which:

Fig. 1 is a side view of a track laying vehicle according to the invention, and

Fig. 2 is a plan view of the vehicle of Fig. 1.

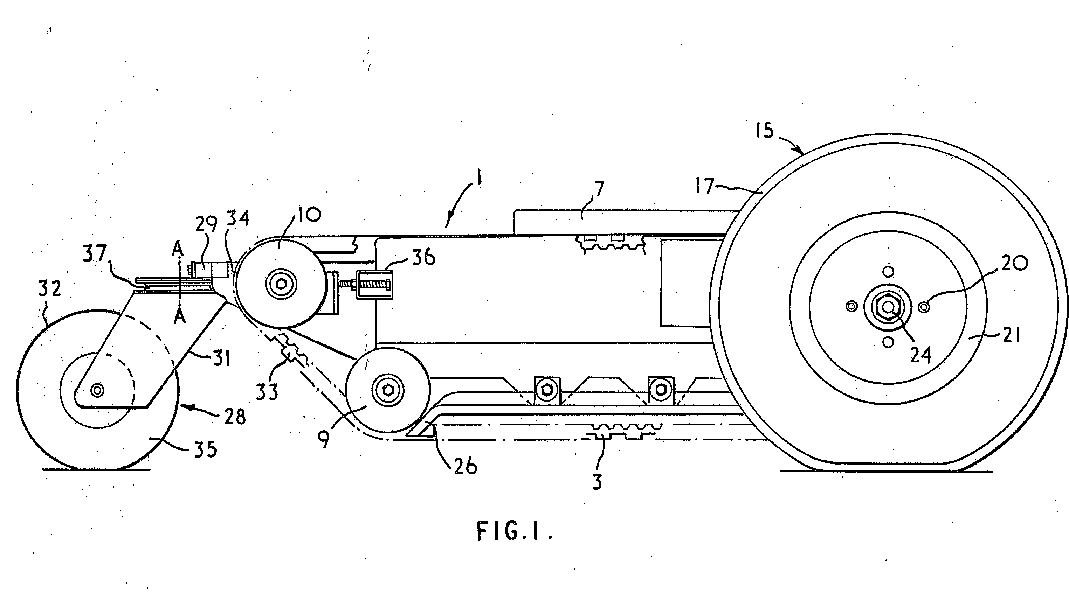

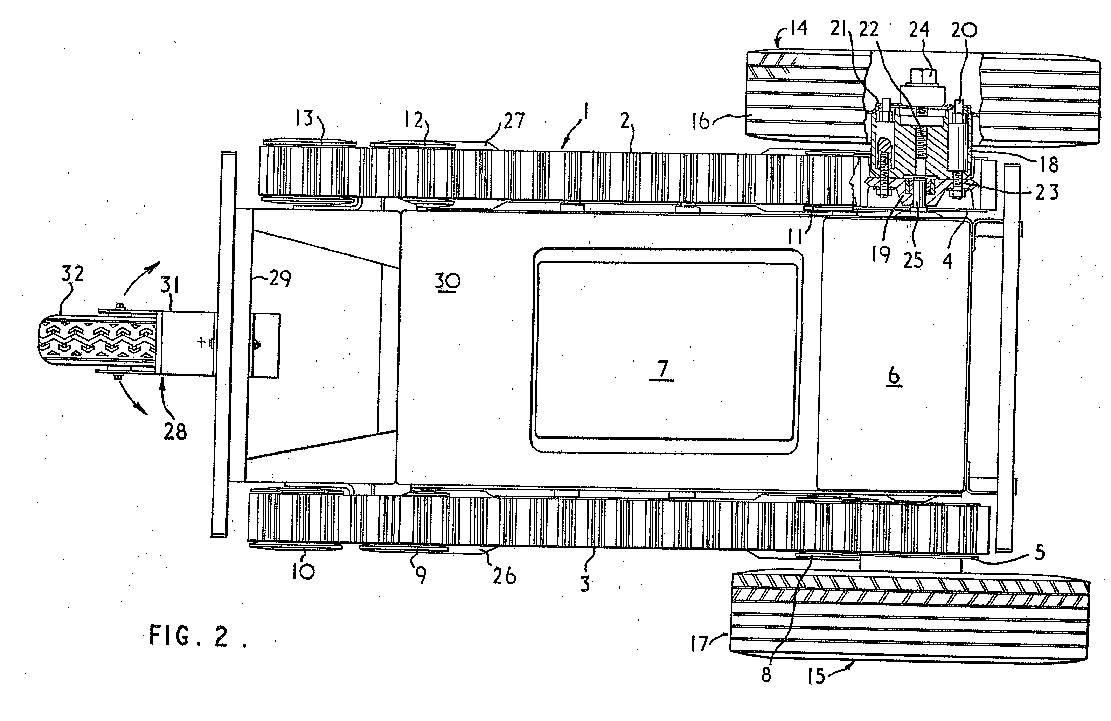

Figs. 1 and 2 show an electrically powered, remote controlled, track laying robot vehicle 1 forming a particularly preferred embodiment of the invention and having tracks 2,3 each driven by a respective track driving wheel 4,5. Wheels 4,5 are driven by a motor 6 powered from a battery 7. Vehicle 1 is used particularly for the investigation and disruption or detonation of explosive devices. One such vehicle is marketed under the trade name "HUNTER" by Technical Research Products Limited of England, and will carry a number of devices, such as remote controlled cameras.

Tracks 2,3 run over a number of idler wheels 8-13 which form the tracks into generally trapezium shape as seen in Fig. 1.

Motor 6 is located at the rear of the vehicle and drives wheels 4,5. Detachably mounted on the drive wheels 4,5 are wheels 14,15 having pneumatic tyres 16,17.

In Fig. 2, a mechanism for detachably mounting wheel 14 on drive wheel 4 is shown. A spacer 18 is bolted onto the hub 19 of wheel 4 by bolts 23. Pins 20 protrude from the spacer 18 and locate in holes in the hub 21 of wheel 14. Spacer 18 has a centrally located threaded stud 22 on which hub 21 is held by a nut 24. Bolt 22 is coaxial with axle 25 supporting hub 19.

The tracks 2,3 are toothed on the inside and driven by toothed drive wheels 4,5.

Scrapers 26,27 clean stones etc. from the inside of the tracks 2,3. Forward idler wheels 10,13 are adjustable by an adjuster 36 to set the tension in the tracks.

At the forward end of the vehicle 1 a castor wheel assembly 28 is mounted. The castor wheel assembly 28 is shown with the vehicle moving to the right in the drawings, although it has been found preferable to move the vehicle with the castor wheel at the front. Castor wheel assembly 28 is bolted to a front frame member 29 of the body 30 of the vehicle 1. Downwardly depending castor arm 31 pivots about an axis A-A just forward of the frame member 29 and is connected to the frame member 29 via a tapered roller bearing 37. A wheel 32 having a pneumatic tyre 35 is mounted at the lower end of arm 31.

To mount the wheels 14,15 and assembly 28 on the vehicle 1 the vehicle may be lifted by hand or by crane or driven onto a low-loader or ramp etc. depending on its size, raising the tracks clear of the ground.

With the wheels 14,15,28 in position the vehicle is driven in the normal manner, the tracks rotating but being clear of the ground. Drive is very efficient as track drives are designed to rotate very freely due to the inherent inefficiency of laying tracks on the ground. The vehicle 1 will travel across a flat surface supported on the wheels, and driven by wheels 14,15. The direction of movement is changed in the normal manner, by varying the relative speeds and/or direction of drive to the track drive wheels 4,5, hence to wheels 14,15. As the vehicle turns the castor arm will rotate about axis A-A, the wheel 32 clearing the tracks 2,3, allowing the front of the vehicle to swing round. If the direction of movement of the vehicle is simply reversed the castor arm will swing through 180°.

Inspection of Fig. 2 will reveal that the leading edge of wheel 32 is always forward of the front run 33 of the tracks 2,3. In a preferred arrangement, however, the leading edge will move to the rear of at least the front tip 34 of the tracks so that the track will encounter raised objects in front of the vehicle allowing the vehicle to climb over the object by use of the tracks which are driven continuously with the wheels. This arrangement is particularly useful where the vehicle is to climb steps or kerbstones etc. Tyre 35 on wheel 32 may be arranged to protrude ahead of the tracks, but be deformable on encountering an obstruction, allowing the track drive to take over.

To climb kerbstones it has been found particularly advantageous to approach the kerb at an angle with the castor wheel at the forward end of the vehicle so that one track meets and climbs the kerbstone. In this way the front end of the vehicle will be raised to the top of the kerbstone. Where the apparatus carried by the vehicle allows, such as cameras mounted for movement along the vehicle, the centre of gravity of the vehicle is shifted to the forward end by moving the apparatus forward under remote control so that it is above the kerbstone, thus causing the rear end of the vehicle to lift, the bottom run of the tracks gripping the edge of the kerbstone to allow the vehicle to continue moving forward.

Tyres 16,17 on the drive wheels 14,15 are large and soft to carry the weight of the vehicle. They may be arranged to be deflatable to allow the tracks to touch a supporting surface, avoiding the need to remove the wheels when tracked drive is required.

The vehicle may be provided with means for remotely controlling the deflation and inflation of the tyres 16,17.

When the vehicle 1 traverses soft ground the tyres 16,17,35, may sink in, whereupon the tracks will contact the ground to take over the drive.

The vehicle 1 may be designed with the track driving wheels 4,5 positioned so that the tyres 16,17 are just forward of the trailing edge of the tracks, for climbing objects when the vehicle is reversed, the operation being similar to that described for the castor wheel.

0165062

Preferably, the single castor wheel assembly 28 is on the centre line of the vehicle 28.

A pair of castor wheel assemblies may be provided. They may be arranged at the corners of the vehicle, to one side of the tracks and/or to the rear of the leading edges of the tracks. The castor wheel assembly or assemblies may be replaced by a positively steerable wheel or wheels for some applications, for example where the weight of the vehicle precludes the use of castor wheels.

Although the invention has been described with reference to remotely controlled robot vehicles, it will be appreciated that it is equally applicable to much larger vehicles such as tanks. When supporting such vehicles it may be desirable to replace the castor wheel or wheels by large wheels attached to the sides of the vehicle in the manner of wheels 14,15.

CLAIMS:

1. A tracklaying vehicle characterised in that a plurality of wheels (14,15,32) are provided to support the vehicle (1) on a surface with its tracks (2,3) clear of the surface, one or more of the wheels (14,15) being driven.

2. A tracklaying vehicle as claimed in claim 1, characterised in that the wheels (14,15,32) are readily detachably mounted (29,24) on the vehicle (1).

3. A tracklaying vehicle as claimed in claim 1 or 2, characterised in that the wheels (14,15,32) are provided with pneumatic tyres (16,17,35) which are deflatable to bring the tracks (2,3) into contact with the supporting surface.

4. A tracklaying vehicle as claimed in claim 1, 2 or 3, characterised in that two driven wheels (14,15) are provided, each being mounted coaxially with a respective track driving wheel (8,11).

5. A tracklaying vehicle as claimed in claim 1, 2, 3 or 4, characterised in that a castor wheel (28) is provided for supporting one end of the vehicle (1) distal of the driven wheels (14,15).

6. A tracklaying vehicle as claimed in claim 5, characterised in that the castor wheel (28) is inboard of the vehicle tracks (2,3).

7. A tracklaying vehicle as claimed in claim 5 or 6, characterised in that the castor wheel (28) is mounted so that when the vehicle (1) moves with the castor wheel at the forward end the wheel (32) is to the rear of the leading edge 34 of the tracks (2,3).

8. A tracklaying vehicle as claimed in any one of claims 1 to 7, characterised in that the driven wheels (14,15) are mounted at an end of the vehicle and positioned so that when said end is the leading end of the vehicle (1) the periphery of each is to the rear of the leading edge of the tracks (2,3).

9. A tracklaying vehicle as claimed in any one of claims 1 to 7, characterised in that the driven wheels (14,15) are mounted at an end of the vehicle and the periphery of each wheel is deformable, said wheels (14,15) being positioned so that when said end is the leading end of the vehicle the periphery is deformable on meeting an object in the path of the vehicle to allow the tracks to engage the object.

FIG.I.

FIG. 2.

0165062